# EUROPÄISCHE PATENTANMELDUNG

(11) **EP 1 561 958 A2**
(43) Veröffentlichungstag der Anmeldung: **10.08.2005**
(21) Anmeldenummer: 05100525.4
(22) Anmeldetag: 27.01.2005
(51) Int. Cl.: F16C 11/04

(54) **Anbindevorrichtung**

(30) Priorität: 09.02.2004 DE 102004006207
(71) Anmelder: HILTI Aktiengesellschaft, 9494 Schaan (LI)
(72) Erfinder: Herb, Armin, 86974, Apfeldorf (DE)
(74) Vertreter: Wildi, Roland

(57) **Zusammenfassung**

Eine Anbindevorrichtung (11) für Abspannmittel an einem Träger einer Tragkonstruktion umfasst ein Anbindeelement (12) und zwei schwenkbar mit dem Anbindeelement (12) verbindbare Schwenkelemente (26). Das Anbindeelement (12) umfasst ein Anlageteil (13) mit einer Durchführöffnung (20) für ein Befestigungsmittel zur Fixierung des Anbindeelementes (12) an dem Träger und zwei senkrecht zu der, von dem Anlageteil (13) gebildeten Ebene ausgerichtete und fest mit diesem verbundene Anschlussteile (14). An jedem Anschlussteil (14) ist ein Kupplungsgegenmittel (15) vorgesehen, in welches ein Kupplungsmittel (30) am Schwenkelement (26) einführbar ist. Das eine Kupplungsgegenmittel (15) ist ein Durchbruch (16) mit zwei stirnseitigen Rändern. Das Kupplungsmittel (30) ist ein, in den Durchbruch (16) einführbarer Bolzen (31) mit einem Hintergreifteil (32) zum Hintergreifen eines der stirnseitigen Ränder des Durchbruchs (16).

## Beschreibung

### Technisches Gebiet

Die Erfindung betrifft eine Anbindevorrichtung für Abspannmittel an einem Träger einer Tragkonstruktion mit zumindest einem Anbindeelement und zumindest einem schwenkbar mit dem zumindest einen Anbindeelement verbindbaren Schwenkelement. Die Anbindevorrichtung weist zumindest ein Kupplungsgegenmittel und zumindest ein in das Kupplungsgegenmittel einführbares Kupplungsmittel zur Schaffung der schwenkbaren Verbindung zwischen dem zumindest einen Anbindeelement und dem zumindest einen Schwenkelement auf. Das zumindest eine Anbindeelement weist ein Anlageteil und zumindest ein, mit dem Anlageteil verbundenes Anschlussteil auf. Das zumindest eine Anschlussteil des Anbindeelementes ist im Wesentlichen senkrecht zu einer, von einem Abschnitt des Anlageteils des Anbindeelementes gebildeten Ebene ausgerichtet und fest mit diesem verbunden. Das Anlageteil weist eine Durchführöffnung für ein Befestigungsmittel zur Fixierung des zumindest einen Anbindeelementes an dem Träger auf. Das zumindest eine Schwenkelement weist eine Aufnahme für ein Abspannmittel auf. Des Weiteren betrifft die Erfindung ein Anbindeelement insbesondere für eine solche Anbindevorrichtung.

### Stand der Technik

In Stahl- und Stahlbetonhallen insbesondere der Industrie werden oftmals Abhängekonstruktionen an den Trägern der Tragkonstruktion angeordnet, beispielsweise zur Schaffung einer flexiblen Anbindemöglichkeit an die benötigte und oft umfangreiche Haustechnik und Prozessmedien, wie beispielsweise Strom, Druckluft und Wasser. Solche Abhängekonstruktionen sind z. B. Rasterdecken, welche mittels Abspannmitteln an der Tragkonstruktion des Gebäudes, beispielsweise an den Dachträgern der Stahl- oder Stahlbetonhalle, in einem bestimmten Abstand zu dieser angehängt werden. Die Abspannmittel für die Abhängekonstruktion müssen infolge der grossen Trägerabstände senkrecht und schräg von den Trägern zum Raster der abgehängten Ebene geführt werden.

Grosse Innenhöhen, weite Trägerabstände und geringe Lastaufnahme an der Dachhaut führen teils zu aufwändigen und teuren Lösungen zur Befestigung der Abspannmittel z. B. an den das Dach tragenden, horizontalen Trägern, wobei sich diese Lösungen oftmals bei einem späteren Umbau der Halle nicht wieder verwenden lassen. Die Montage solcher Abhängekonstruktionen erfolgt zudem oftmals in einer grossen Höhe über dem Boden der Halle, so dass zur Reduktion des Montageaufwands und der Unfallgefahr für das Montagepersonal die verwendeten Anbindevorrichtungen einfach händelbar sein müssen.

Aus der GB 806,051 ist ein zwingenartig ausgebildetes Anbindeelement für die Befestigung desselben an einem Stahlträger bekannt, wobei an einem Abschnitt des Anbindeelementes ein U-förmiger Bügel zur Anordnung eines Hakens in einer Ausrichtung parallel zu einer Flanschfläche des Stahlträgers angeordnet ist.

Nachteilig an der bekannten Lösung ist, dass der Haken aus dem Bügel in bestimmten Stellungen zu diesem herausgleiten kann und so eine Sicherheit gegen ein unbeabsichtigtes Lösen der Vorrichtung nicht immer gegeben ist. Zudem ist diese Vorrichtung nur für geringe Belastungen ausgerichtet, z. B. für daran befestigte Leitungen und Beleuchtungen.

Aus der DE 32 24 986 A1 ist eine Anbindevorrichtung mit Gewindestangen zum Abspannen einer abgehängten Decke bekannt, bei der ein Anbindeelement an der Decke befestigt wird, in welchem ein hierin drehbeweglich gelagertes Gelenkteil angeordnet ist. Das Anbindeelement weist eine Aufnahme für einen Zapfen des Gelenkteils auf. Das Gelenkteil weist weiter eine Aufnahme für eine schräg ausgerichtete Gewindestange auf. Durch die Aufnahme wird die Gewindestange hindurchführt und mittels einer Mutter an dem Gelenkteil gesichert oder die Aufnahme ist mit einem Innengewinde versehen, in welches die Gewindestange in Eingriff bringbar ist.

Nachteilig an der bekannten Lösung ist, dass diese Anbindevorrichtung aufwändig in der Montage ist. Zudem ist die Ausmittlung der Abspannelemente mit der bekannten Lösung nur beschränkt möglich. Die Wirkungslinien der in den Abspannmittel wirkenden Kräfte sind bei dieser Anbindevorrichtung versetzt zueinander wirksam, so dass die Anbindevorrichtung zusätzlichen Quer- und Momentbelastungen ausgesetzt ist und daher massiv ausgebildet sein muss.

### Darstellung der Erfindung

Aufgabe der Erfindung ist es, eine Anbindevorrichtung zu schaffen, die oben genannten Nachteile zu vermeiden und flexibel anwendbar ist.

Die Aufgabe ist durch die Merkmale des unabhängigen Anspruchs gelöst. Vorteilhafte Weiterbildungen sind in den Unteransprüchen dargelegt.

Gemäss der Erfindung umfasst das zumindest eine Kupplungsgegenmittel einen, vorzugsweise kreiszylindrischen, Durchbruch mit zwei stirnseitigen Rändern. Der Durchbruch weist eine quer zu der, von dem Querschnitt des Durchbruchs aufgespannten Ebene verlaufende Nut auf. Das zumindest eine Kupplungsmittel umfasst einen, in den Durchbruch einführbaren, vorzugsweise kreiszylindrischen, Bolzen mit einem Hintergreifteil zum Hintergreifen eines der stirnseitigen Ränder des Durchbruchs, wobei das an einem freien Rand des Bolzens ausgebildete Hintergreifteil, vorzugsweise im Wesentlichen komplementär zu der Nut ausgebildet ist.

Das zumindest eine Anbindeelement wird in einem ersten Montageschritt mittels dem Anbindeteil an dem Träger festgelegt und das zumindest eine Schwenkelement über das Kupplungsmittel und das Kupplungsgegenmittel mit dem Anbindeelement zusammengeführt. Anschliessend kann das Abspannmittel an der entsprechenden Aufnahme am Schwenkelement festgelegt werden. In einer Variante dazu wird zuerst das Abspannmittel an dem zumindest einen Schwenkelement festgelegt und anschliessend das zumindest eine Schwenkelement mit dem Anbindeelement über das Kupplungsmittel und das Kupplungsgegenmittel zu der Anbindevorrichtung zusammengeführt.

Mittels des Hintergreifteils ist die Verbindung senkrecht zur Ebene, die von dem zumindest einen Anschlussteil gebildet wird, gesichert. Die in den Abspannmitteln auftretenden Kräfte liegen allesamt in einer Ebene, so dass die Anbindevorrichtung keine Quer-, beziehungsweise Momentkräfte aufnehmen muss und auch bei einer einfachen Ausgestaltung hohe Kräfte übernimmt. Mittels der schwenkbaren Verbindung zwischen dem Anbindeelement und dem zumindest einen Schwenkelement können beliebige Winkelstellungen des zumindest einen Abspannmittel zu dem Träger an ein und derselben Anbindevorrichtung angeordnet werden.

Der vorzugsweise kreiszylindrisch ausgebildete Durchbruch und der vorzugsweise kreiszylindrisch und komplementär zu dem Durchbruch ausgebildete Bolzen bilden im zusammengeführten Zustand der erfindungsgemässen Anbindevorrichtung ein Schwenklager, wobei der Durchbruch das Lagerauge ausbildet und eine Beschichtung oder ein Lagerelement, wie z. B. ein Kugellager, aufweisen kann. Der Bolzen kann auch als Zapfen oder dergleichen, als Vollkörper oder Hohlkörper, ausgebildet sein.

Die Nut des Durchbruchs bildet eine Führung für das Hintergreifteil am Bolzen, womit sich das zumindest eine Schwenkelement nur in einer bestimmten Stellung mit dem Anbindeelement zusammenführen lässt, welche üblicherweise in der, an den Abspannmitteln festgelegten Stellung der zumindest zwei Teile der Anbindevorrichtung zueinander nicht eingenommen wird. Damit wird auch bei einer Belastung auf die Anbindevorrichtung senkrecht zur Ebene, welche von dem zumindest einen Anschlussteil gebildet wird, ein unbeabsichtigtes Lösen der Verbindung zwischen dem Anbindeelement und dem zumindest einen Schwenkelement im montierten Zustand der Anbindevorrichtung verhindert.

In einer Variante dazu ist der Bolzen des Kupplungsmittels als geschlitzte Hülse mit einem verbreiterten, am freien Ende der Hülse angeordneten Rand ausgebildet, der als Hintergreifteil zum Hintergreifen eines der stirnseitigen Ränder des als Durchbruch ausgebildeten Kupplungsgegenmittel dient. Beim Zusammenführen der zumindest zwei Teile der Anbindevorrichtung wird eine Einschnappverbindung zwischen dem Kupplungsmittel und dem Kupplungsgegenmittel geschaffen.

Mittels des zumindest einen, im Wesentlichen senkrecht zu einer, von einem Abschnitt des Anlageteils des Anbindeelementes gebildeten Ebene ausgerichteten Anschlussteil, welches das Kupplungsgegenmittel beziehungsweise das Kupplungsmittel aufweist, kann zumindest ein Schwenkelement einfach an diesem angeordnet werden. Zudem ist das zumindest eine Schwenkelement zu einer Aussenseite des Trägers beabstandet, was einen grösseren Schwenkbereich des zumindest einen, mit dem Anbindeelement zusammengeführten Schwenkelementes ermöglicht.

Bevorzugt weist zumindest einer der stirnseitigen Randbereiche des Durchbruchs eine Vertiefung auf, die optional umlaufend ausgebildet und deren in der, von dem Durchbruch aufgespannten Ebene liegenden Erstreckungen grösser als die entsprechende Erstreckungen des Durchbruch sind. Ist der Durchbruch als zylindrische Bohrung ausgebildet, ist die Vertiefung vorzugsweise konzentrisch zu dieser angeordnet und die Begrenzung der Vertiefung weist einen grösseren Radius als der Radius des Durchbruchs auf. Die Vertiefung ist bevorzugt derart ausgestaltet, dass das Hintergreifteil sowie der Bolzen nicht über die, von der Aussenfläche des entsprechenden Elementes aufgespannte Ebene hinausragt. Durch eine umlaufend angeordnete Vertiefung steht im Wesentlichen ein Schwenkbereich des zumindest einen, an dem Anbindeelement angeordneten Schwenkelementes von 360° zur Verfügung.

Vorteilhafterweise ist zumindest in einem Bereich des Kupplungsgegenmittels zumindest ein Anschlag zur Begrenzung des Schwenkbereichs des zumindest einen, schwenkbar mit dem Anbindeelement verbindbaren Schwenkelementes vorgesehen. Da die erfindungsgemässe Anbindevorrichtung oftmals in grosser Höhe über dem Boden montiert werden muss, muss der Arbeitssicherheit des Montagepersonals eine grosse Beachtung geschenkt werden. Wird zumindest ein Schwenkelement mit dem Anbindeelement zusammengeführt, verhindert der zumindest eine Anschlag ein unerwünschtes Abdrehen des Schwenkelementes am Anbindeelement in die Einführposition, in welcher das Schwenkelement bei der Montage aus dem Anbindeelement herausfallen kann. Der Monteur hat nach dem Zusammenführen seine Hände für die weiteren Montagearbeiten frei. Mittels zwei oder mehr Anschlägen in einem Bereich des Kupplungsgegenmittels kann der zulässige Schwenkbereich für ein mit dem Anbindeelement zusammengeführten Schwenkelement derart begrenzt werden, dass beispielsweise statisch ungünstige Ausrichtungen der zumindest beiden Teile der Anbindevorrichtung zueinander verunmöglicht werden.

Vorzugsweise sind zwei Kupplungsgegenmittel für eine Anordnung von zwei Kupplungsmitteln vorgesehen. Mit dieser erfindungsgemässen Anbindevorrichtung lassen sich zwei schräg von den Trägern der Tragstruktur abzuspannende Abspannmittel an einem Anbindeelement anordnen.

In einer bevorzugten Ausführungsform der erfindungsgemässen Anbindevorrichtung ist das zumindest eine Kupplungsgegenmittel an dem zumindest einen Anschlussteil des zumindest einen Anbindeelementes und das Kupplungsmittel an dem zumindest einen Schwenkelement vorgesehen. Weist das zumindest eine Anschlussteil des zumindest einen Anbindeelementes zwei Kupplungsgegenmittel auf, so sind die Vertiefungen in zumindest einem der stirnseitigen Randbereiche des Durchbruchs bevorzugt jeweils gegenüberliegend an den Seitenwänden des zumindest einen Anschlussteils angeordnet, so dass das eine Schwenkelement von der einen Seite und das andere Schwenkelement von der anderen Seite zugeführt werden. Damit ist eine sichere Verbindung der Teile der Anbindevorrichtung untereinander bei unterschiedlichen Belastungen auf die Anbindevorrichtung gewährleistet. Die Positionen der Nut in den Durchbrüchen des zumindest einen Anschlussteils des zumindest einen Anbindeelementes und die Ausrichtung des Hintergreifteils am Bolzen der Schwenkelemente sind vorzugsweise derart gewählt, dass in der Einführposition der beiden Schwenkelemente diese sich gegenseitig behindern würden und somit eine Ausrichtung der Schwenkelemente in der Einführposition nicht praktikabel ist.

In einer weiteren bevorzugten Ausführungsform der erfindungsgemässen Anbindevorrichtung ist das zumindest eine Kupplungsmittel an dem zumindest einen Anschlussteil des zumindest einen Anbindeelementes und das Kupplungsgegenmittel an dem zumindest einen Schwenkelement vorgesehen. Weist das Zentralelement zumindest eine Anschlussteil des zumindest einen Anbindeelementes zwei Kupplungsmittel auf, so sind die Bolzen mit den Hintergreifteilen bevorzugt jeweils gegenüberliegend an den Seitenwänden des zumindest einen Anschlussteils des zumindest einen Anbindeelementes angeordnet, so dass das eine Schwenkelement von der einen Seite und das andere Schwenkelement von der anderen Seite zugeführt werden kann. Damit ist eine sichere Verbindung der Teile der Anbindevorrichtung untereinander bei unterschiedlichen Belastungen auf die Anbindevorrichtung gewährleistet. Die Positionen der Nut in den Durchbrüchen des Schwenkelementes und die Ausrichtung der Hintergreifteile an den Bolzen des zumindest einen Anschlussteil des zumindest einen Anbindeelementes sind vorzugsweise derart gewählt, dass in der Einführposition der beiden Schwenkelemente diese sich gegenseitig behindern würden und somit eine Ausrichtung der Schwenkelemente in der Einführposition nicht praktikabel ist.

Bevorzugt weist das Anlageteil des Anbindeelementes einen ersten Zwingenabschnitt, einen dem ersten Zwingenabschnitt gegenüberliegend angeordneten zweiten Zwingenabschnitt sowie einen die beiden Zwingenabschnitte verbindenden Verbindungsabschnitt zum Umgreifen eines Trägerrandes auf. Die Durchführöffnung für das Befestigungsmittel ist an einem der Zwingenabschnitte vorgesehen und der zumindest eine Anschlussteil ist optional an dem Verbindungsabschnitt angeordnet. Durch die zwingenartige Ausgestaltung lässt sich das zumindest eine Anbindeelement einfach an einem Träger anordnen, der einen flanschähnlichen Abschnitt aufweist. Die Durchführöffnung an dem Zwingenabschnitt ist vorteilhafterweise mit einem Innengewinde versehen, in welches eine als Befestigungsmittel dienende Schraube mit einem Aussengewinde in Eingriff bringbar ist. Das Befestigungsmittel kann als Angreifmittel einen Schraubenkopf oder eine, mit dem Befestigungsmittel festverbundene Flügelmutter aufweisen, welche werkzeuglos von Hand betätigbar ist.

Vorteilhafterweise weist das zumindest eine Schwenkelement einen ersten Schenkel, einen zweiten Schenkel und einen die beiden Schenkel verbindenden Verbindungsabschnitt auf, wobei das Kupplungsmittel oder das Kupplungsgegenmittel am ersten Schenkel des Schwenkelementes und die Aufnahme für das Abspannmittel an dem zweiten Schenkel des Schwenkelementes ausgebildet sind. Mittels dieser Ausgestaltung des zumindest einen Schwenkelementes können im zusammengeführten Zustand der einzelnen Teile der Anbindevorrichtung die Wirkungslinien der Kräfte von den Abspannelementen nahe zusammen gebracht werden, womit gegebenenfalls nur geringe Momentbelastungen auf die Anbindevorrichtung wirken. Der Abstand zwischen dem ersten Schenkel und dem zweiten Schenkel des zumindest einen Schwenkelementes ist derart gewählt, dass ein ausreichender Raum zur Ausmittlung der Abspannmittel vorhanden ist.

Vorzugsweise ist die Aufnahme für das Abspannmittel an dem zweiten Schenkel des Schwenkelementes als von einer Seite des zweiten Schenkels verlaufender, offener Schlitz ausgebildet. Damit kann ein Anschlussbereich des Abspannmittels in die Aufnahme eingeschoben und an dem zumindest einen Schwenkelement festgelegt werden. Der Montageaufwand wird dadurch wesentlich vereinfacht.

Bevorzugt weist der Verbindungsabschnitt des Schwenkelementes eine Einführöffnung zum Einführen des Abspannmittels auf, wobei vorzugsweise die Einführöffnung mit dem Schlitz im zweiten Schenkel des Schwenkelementes in Verbindung steht. Damit kann auch ein gegenüber dem Abspannmittel wesentlich vergrösserter Anschlussbereich des Abspannmittels, wie er beispielsweise bei Abspannmitteln für hohe Belastungen erforderlich ist, in die Aufnahme eingeschoben und an dem zumindest einen Schwenkelement festgelegt werden. Für partiell grosse Anschlussbereiche des Abspannmittels kann die Einführöffnung bereichsweise erweitert sein. Der Montageaufwand wird somit auch bei Anbindevorrichtungen für hohe Belastungen vereinfacht.

Die Abspannmittel sind beispielsweise Gewindestangen, welche neben Zugbelastungen auch beschränkt Druckbelastungen übernehmen können. Anstelle von Gewindestangen können auch glatte Rundstangen, Bewehrungsstäbe oder Seile beispielsweise aus Stahl als Abspannmittel verwendet werden. Die Abspannmittel weisen z. B. in einem Anschlussbereich eine Fixiervorrichtung auf. Sind die Abspannmittel beispielsweise als Gewindestangen, glatte Rundstangen oder Bewehrungsstäbe ausgebildet, weist deren Anschlussbereich z. B. als Fixiervorrichtung einen Gewindeabschnitt mit einem Aussengewinde und daran anordnenbare Muttern auf. Vorzugsweise umfasst die Fixiervorrichtung an den Abspannmitteln zur Fixierung der Abspannmittel an dem Schwenkelement zwei Muttern, welche den zweiten Schenkel des Schwenkelementes mit der Aufnahme zwischen sich einklemmen. Bei Seilen als Abspannmittel weist deren Anschlussbereich vorteilhafterweise ebenfalls einen Gewindeabschnitt mit einem Aussengewinde und daran anordnenbare Muttern auf. Mit der Fixiereinrichtung lassen sich die Abspannmittel im zusammengeführten Zustand der einzelnen Teile der Anbindevorrichtung einfach ausmitteln und fixieren, was den Montageaufwand erleichtert.

Ein erfindungsgemässes Anbindeelement, insbesondere für eine oben genannte Anbindevorrichtung, weist ein Anlageteil und zumindest ein, mit dem Anlageteil verbundenes Anschlussteil auf. Das Anlageteil weist eine Durchführöffnung für ein Befestigungsmittel zur Fixierung des Anbindeelementes an einem Träger auf. Das zumindest eine Anschlussteil des Anbindeelementes ist im Wesentlichen senkrecht zu einer, von einem Abschnitt des Anlageteils des Anbindeelementes gebildeten Ebene ausgerichtet und fest mit diesem verbunden. Das zumindest eine Kupplungsgegenmittel für eine Anordnung zumindest eines mit einem Kupplungsmittel versehenen Schwenkelementes ist an dem zumindest einen Anschlussteil des Anbindeelementes vorgesehen. Das zumindest eine Kupplungsgegenmittel ist ein, vorzugsweise kreiszylindrischer, Durchbruch mit zwei stirnseitigen Rändern. Der Durchbruch weist eine quer zu der, von dem Querschnitt des Durchbruchs aufgespannten Ebene verlaufende Nut auf, in welcher ein Bolzen mit einem Hintergreifteil eines Kupplungsmittels eines Schwenkelementes geführt und durch Verdrehen desselben veriegelbar ist. Das Anbindeelement wird in einem ersten Montageschritt mittels des Anbindeteils an dem Träger festgelegt und ein Schwenkelement kann über das Kupplungsmittel und das Kupplungsgegenmittel mit dem Anbindeelement zusammengeführt werden.

Mittels des zumindest einen, im Wesentlichen senkrecht zu einer, von einem Abschnitt des Anlageteils des Anbindeelementes gebildeten Ebene ausgerichteten Anschlussteil, welches das Kupplungsgegenmittel aufweist, kann zumindest ein Schwenkelement einfach an diesem angeordnet werden. Zudem wird mit dem Anschlussteil ein Abstand der Schwenkverbindung zum Trägerrand geschaffen, welche einen grossen Schwenkbereich des zumindest einen Schwenkelementes ermöglicht.

Bevorzugt weist zumindest einer der stirnseitigen Randbereiche des Durchbruchs eine Vertiefung auf, welche optional umlaufend ausgebildet und deren in der, von dem Querschnitt des Durchbruchs aufgespannten Ebene liegenden Erstreckungen grösser als die entsprechenden Erstreckungen des Durchbruchs sind. Ist der Durchbruch als zylindrische Bohrung ausgebildet, ist die Vertiefung vorzugsweise konzentrisch zu dieser angeordnet und die Begrenzung der Vertiefung weist einen grösseren Radius als der Radius des Durchbruchs auf. Die Vertiefung ist bevorzugt derart ausgestaltet, dass ein Kupplungsmittel, wie ein Bolzen mit einem Hintergreifteil nicht über die, von der Aussenfläche des Anschlussteils des Anbindeelementes aufgespannte Ebene hinausragt. Durch eine umlaufend angeordnete Vertiefung steht im Wesentlichen ein Schwenkbereich eines, an dem Anbindeelement angeordneten Schwenkelementes von 360° zur Verfügung.

Vorzugsweise ist zumindest in einem Bereich des Kupplungsgegenmittels zumindest ein Anschlag zur Begrenzung des Schwenkbereichs eines an dem Anbindeelement anordnenbaren Schwenkelementes vorgesehen. Wird ein Schwenkelement mit dem Anbindeelement zusammengeführt, verhindert der zumindest eine Anschlag ein unerwünschtes Abdrehen des Schwenkelementes am Anbindeelement in die Einführposition, in welcher das Schwenkelement bei der Montage aus dem Anbindeelement herausfallen kann. Mittels zwei oder mehr Anschlägen in einem Bereich des Kupplungsgegenmittels am Anbindeelement kann der zulässige Schwenkbereich für ein mit dem Anbindeelement zusammengeführten Schwenkelement begrenzt werden, womit beispielsweise statisch ungünstige Ausrichtungen der zumindest beiden Teile der Anbindevorrichtung zueinander verunmöglicht werden.

Eine erfindungsgemässe Variante des Anbindeelementes, insbesondere für eine oben genannte Anbindevorrichtung, weist ein Anlageteil und zumindest ein, mit dem Anlageteil verbundenes Anschlussteil auf. Das Anlageteil weist eine Durchführöffnung für ein Befestigungsmittel zur Fixierung des Anbindeelementes an einem Träger auf. Das zumindest eine Anschlussteil des Anbindeelementes ist im Wesentlichen senkrecht zu einer, von zumindest einem Abschnitt des Anlageteils des Anbindeelementes gebildeten Ebene ausgerichtet und fest mit diesem verbunden. An dem Anschlussteil des Anbindeelementes ist zumindest ein Kupplungsmittel für eine Anordnung von zumindest einem mit einem Kupplungsgegenmittel versehenen Schwenkelement vorgesehen. Das zumindest eine Kupplungsmittel umfasst einen, in einen Durchbruch einführbaren, vorzugsweise kreiszylindrisch ausgebildeten Bolzen mit einem Hintergreifteil zum Hintergreifen eines der stirnseitigen Ränder eines Durchbruchs umfasst. Das Hintergreifteil ist an einem freien Rand des Bolzens ausgebildet. Der Bolzen kann auch als Zapfen, Hülse oder dergleichen, sowie als Vollkörper oder Hohlkörper ausgebildet sein. Zur Sicherung einer Verbindung zwischen dem Anbindeelement und einem mit diesem verbindbaren Schwenkelement wird dieses über das Kupplungsmittel am Anbindeelement geführt und das Schwenkelement durch Verdrehen um das Kupplungsmittel mit dem Anbindeelement schwenkbar verriegelt.

Vorteilhafterweise sind zwei Kupplungsgegenmittel oder zwei Kupplungsmittel für eine schwenkbare Anordnung von zwei Schwenkelementen an dem Anbindeelement vorgesehen. Bevorzugt weist das Anbindeelement zwei, im Wesentlichen parallel zueinander beabstandete Anschlussteile für die Anordnung von zwei Kupplungsgegenmitteln oder zwei Kupplungsmitteln auf. In einer Variante dazu sind die beiden Kupplungsgegenmittel oder die beiden Kupplungsmittel nebeneinander an einem Anschlussteil vorgesehen. Mit dem erfindungsgemässen Anbindeelement lassen sich zwei Schwenkelemente und somit zwei Abspannmittel an einem Anbindeelement anordnen. Bevorzugt sind die beiden Kupplungsgegenmittel oder die beiden Kupplungsmittel am Anbindeelement zur Schaffung einer sicheren Verbindung zwischen dem erfindungsgemässen Anbindeelement und den daran anordnenbaren Schwenkelementen jeweils gegenüberliegend an den Seiten des oder der Anschlussteile des Anbindeelementes angeordnet, so dass ein Schwenkelement von der einen Seite und ein zweites Schwenkelement von der anderen Seite zugeführt werden muss.

Bevorzugt weist das Anlageteil des Anbindeelementes einen ersten Zwingenabschnitt, einen dem ersten Zwingenabschnitt gegenüberliegend angeordneten Zwingenabschnitt und einen die beiden Zwingenabschnitte verbindenden Verbindungsabschnitt zum Umgreifen eines Trägerrandes auf. Die Durchführöffnung für das Befestigungsmittel ist an einem der Zwingenabschnitte vorgesehen. Vorteilhafterweise ist der zumindest eine Anschlussteil an dem Verbindungsabschnitt angeordnet ist. Durch die zwingenartige Ausgestaltung lässt sich das Anbindeelement einfach an einem Träger mit einem flanschähnlichen Abschnitt anordnen. Die Durchführöffnung an dem Zwingenabschnitt ist vorteilhafterweise mit einem Innengewinde versehen, in welches eine als Befestigungsmittel dienende Schraube mit einem Aussengewinde in Eingriff bringbar ist. Das Befestigungsmittel kann als Angreifmittel einen Schraubenkopf oder eine, mit dem Befestigungsmittel festverbundene Flügelmutter aufweisen, welche werkzeuglos von Hand betätigbar ist.

Vorzugsweise sind an dem ersten Zwingenabschnitt und/oder an dem zweiten Zwingenabschnitt zumindest zwei im Querschnitt im Wesentlichen konisch, unter Bildung einer Verengung zwischen dem ersten Zwingenabschnitt und dem zweiten Zwingenabschnitt auf einen Kulminationspunkt zulaufende Anlageflächen vorgesehen. Damit kann das Anbindeelement an einem geneigt verlaufenden Träger, beispielsweise an einem Dachträger einer Halle mit einem Pultdach, angeordnet und ausgerichtet werden. Vorteilhafterweise sind zumindest an einem Zwingenabschnitt zumindest zwei gegeneinander abgewinkelte und im Wesentlichen senkrecht zu den, von den Anlageflächen gebildeten Ebenen ausgerichtete Durchführöffnungen mit jeweils einem Innengewinde vorgesehen, in welche je ein Befestigungsmittel zur Festlegung des Anbindeelementes an dem Träger eingreifen kann. Für die Anordnung eines Verspannmittels, z. B. einer Gewindestange, für zwei einander gegenüberliegend an dem Träger angeordneten Anbindeelementen kann zumindest einer der Zwingenabschnitte eine Ausnehmung aufweisen.

Die Anbindevorrichtung, das Anbindeelement sowie das zumindest eine Schwenkelement sind vorteilhafterweise aus Metall gefertigt, wobei die Herstellung der Teile aus Gussmetall bevorzugt ist. Metall und Gussmetall ermöglichen eine kostengünstige Fertigung der Teile und gewähren gleichzeitig eine lange Gebrauchstauglichkeit. Bei einer Verwendung der Anbindevorrichtung z. B. in chemisch aggressiver Umgebung werden die einzelnen Teile vorzugsweise aus einem korrossionsbeständigen Material hergestellt. Alternativ kann eines der Teile oder sämtliche Teile aus einem geeigneten Kunststoff gefertigt sein, welcher die für die Gebrauchstauglichkeit erforderlichen Eigenschaften aufweist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Einen Schnitt durch einen Betonträger mit einer Aufhängung mit erfindungsgemässen Anbindevorrichtungen;
- Fig. 2: eine erfindungsgemässe Anbindevorrichtung im Schnitt;
- Fig. 3: eine erfindungsgemässe Anbindevorrichtung in Seitenansicht gemäss der Linie III-III in Fig. 2;
- Fig. 4: eine Variante einer erfindungsgemässen Anbindevorrichtung in Seitenansicht;
- Fig. 5: eine Variante einer erfindungsgemässen Anbindevorrichtung in Seitenansicht;
- Fig. 6: einen Schnitt durch die Anbindevorrichtung gemäss der Linie VI-VI in Fig. 5;
- Fig. 7: einen Schnitt durch einen Stahlträger mit einer Aufhängung mit einem weiteren Ausführungsbeispiel erfindungsgemässer Anbindevorrichtungen;
- Fig. 8: ein Anbindeelement zur Anordnung an einem Stahlträger in Seitenansicht;
- Fig. 9: eine Variante des in Fig. 8 gezeigten Anbindeelementes in einer Ansicht;
- Fig. 10: ein Ausführungsbeispiel eines erfindungsgemässen Schwenkelementes im Längsschnitt; und
- Fig. 11: ein zweites Ausführungsbeispiel eines erfindungsgemässen Schwenkelementes in einer Teilseitenansicht.

Grundsätzlich sind in den Figuren gleiche Teile mit den gleichen Bezugszeichen versehen.

### Wege zur Ausführung der Erfindung

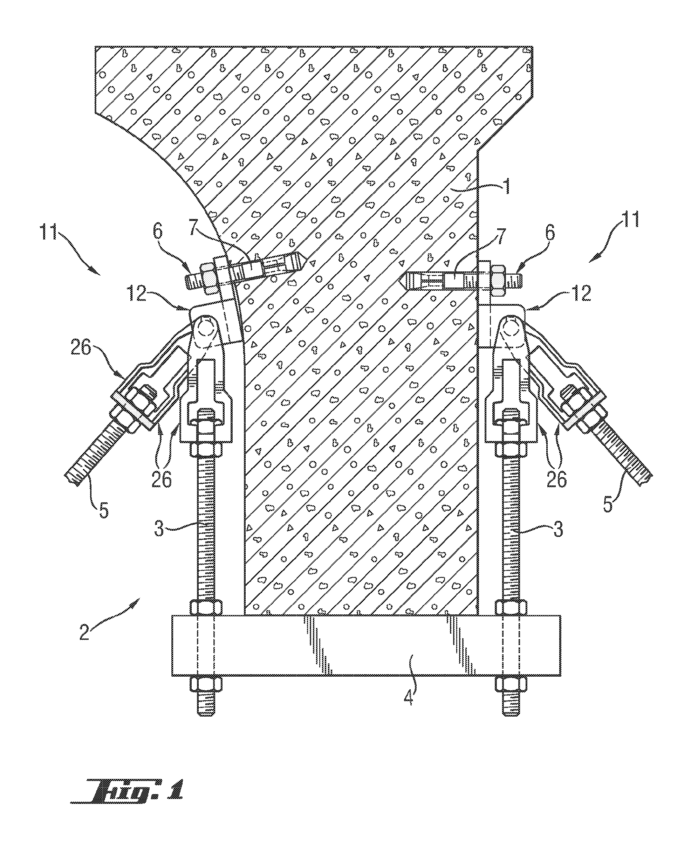

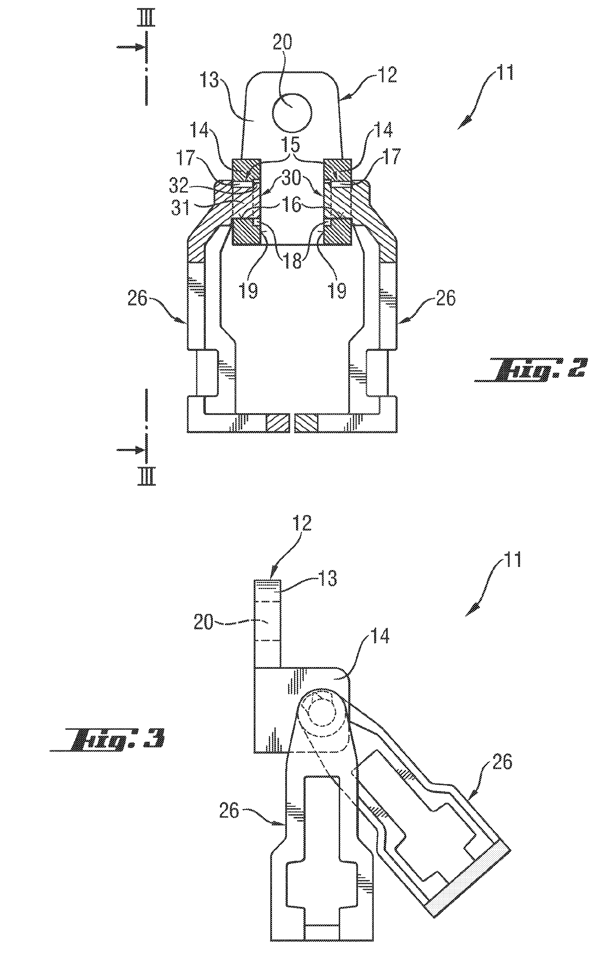

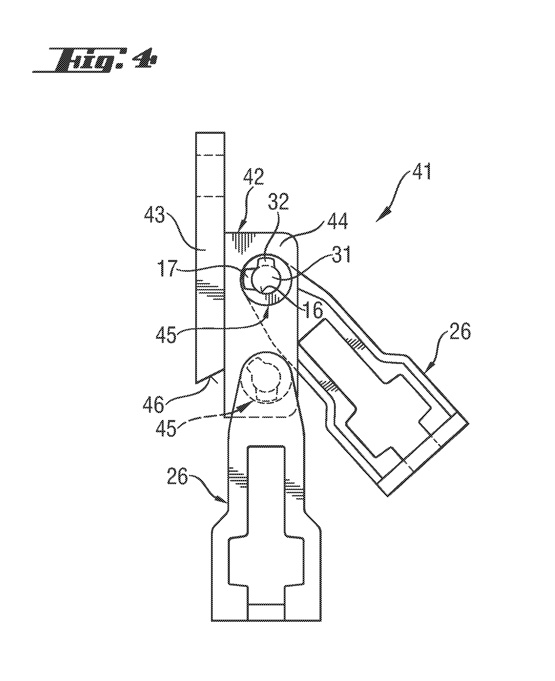

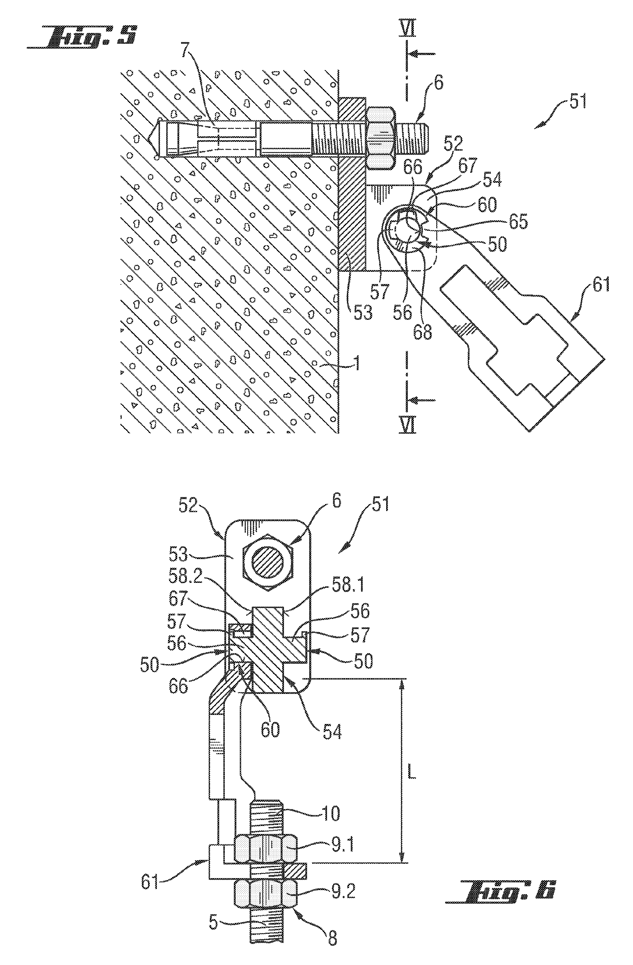

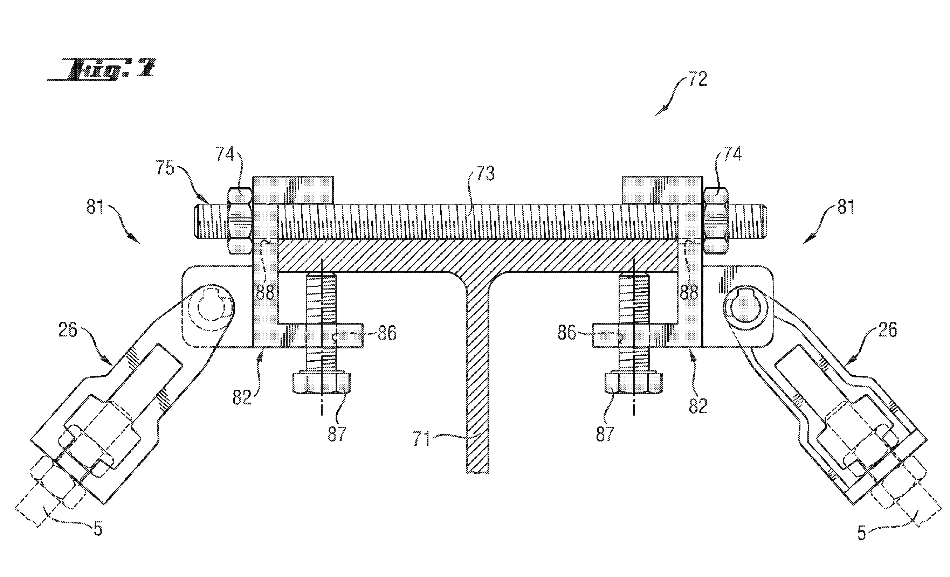

Die in Fig. 1 an einem Betonträger 1 mittels zwei erfindungsgemässen Anbindevorrichtungen 11 erstellte Aufhängung 2 umfasst einen an zwei Abspannmitteln 3 angehängten Montageschienenabschnitt 4 z. B. zur Leitungsstrangbefestigung. An den Anbindevorrichtungen 11 sind weiter schrägverlaufende Abspannmittel 5 für eine Abhängekonstruktion oder dergleichen festgelegt. Die Anbindeelemente 12 sind mittels als Befestigungsmittel 6 dienenden Dübeln 7 an dem Betonträger 1 fixiert.

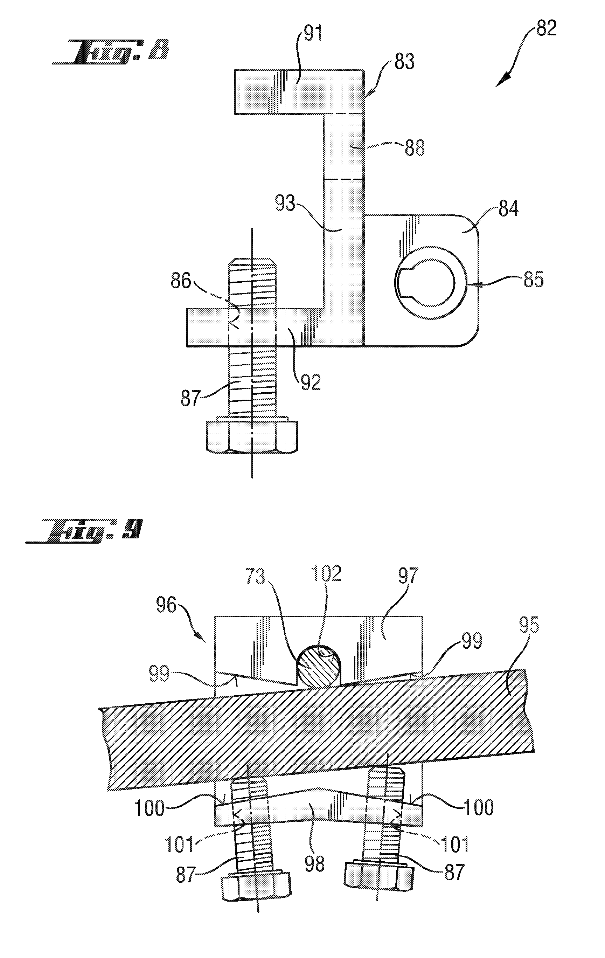

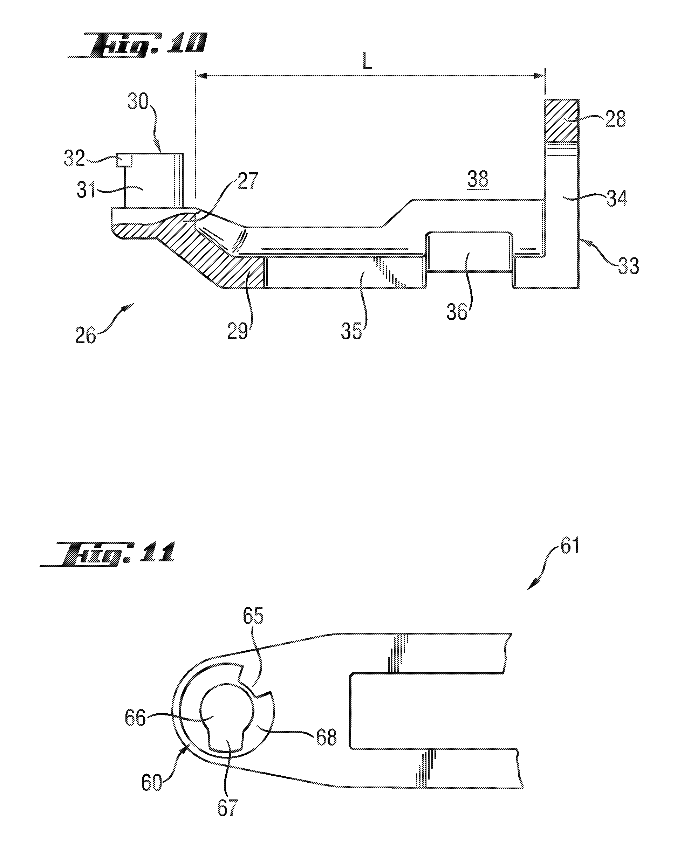

Die erfindungsgemässe Anbindevorrichtung 11 gemäss den Fig. 2 und Fig. 3 umfasst ein Anbindeelement 12 und zwei an dem Anbindeelement 12 schwenkbar angeordnete Schwenkelemente 26. Das Anbindeelement 12 weist ein Anlageteil 13 und zwei senkrecht dazu ausgerichtete, fest mit dem Anlageteil 13 verbundene Anschlussteile 14 auf, wobei als Kupplungsgegenmittel 15 zwei jeweils als zylindrische Bohrung ausgebildete Durchbrüche 16 mit stirnseitigen Rändern vorhanden sind. Die Durchbrüche 16 weisen jeweils eine quer zu der von dem Querschnitt des Durchbruchs 16 aufgespannten Ebene verlaufende Nut 17 auf. Die Nuten 17 sind derart angeordnet, dass zwei mit dem Anbindeelement 12 zusammengeführte Schwenkelemente 26 nicht gleichzeitig in die Einführposition gebracht werden können. Im stirnseitigen Randbereich der beiden Durchbrüche 16 ist jeweils eine konzentrisch zu dem Durchbruch 16 angeordnete Vertiefung 18 vorgesehen. Die Vertiefungen 18 sind an beiden Durchbrüchen 16 jedoch jeweils an den gegenüberliegenden Seiten 19 des Anbindeelementes 12 angeordnet. Der Radius der Vertiefungen 18 in der Ebene der Seiten 19 weist einen grösseren Betrag als der Radius der Durchbrüche 16 auf. An dem Anlageteil 13 des Anbindeelementes 12 ist eine Durchführöffnung 20 zur Durchführung des Befestigungsmittels 6 vorgesehen zur Festlegung des Anbindeelementes 12 an einem Träger.

Das in der Fig. 4 dargestellte Anbindeelement 42 der erfindungsgemässen Anbindevorrichtung 41 zeigt eine Variante zu dem Anbindeelement 12, an welchem ebenfalls zwei Schwenkelemente 26 schwenkbar anordnenbar sind. Das Anbindeelement 42 weist nur ein senkrecht zum Anlageteil 43 ausgerichtetes und fest mit diesem verbundenes Anschlussteil 44 auf. Die beiden Kupplungsgegenmittel 45 sind übereinander, im Wesentlichen parallel zu der, von dem Anlageteil 43 gebildeten Ebene am Anschlussteil angeordnet und analog zu den Kupplungsgegenmitteln 15 der Anbindeelemente 12 ausgebildet. Das Anlageteil 43 weist am freien Ende im Anschlussbereich mit dem Anschlussteil 44 eine Abfasung 46 auf, welche einen grösseren Schwenkbereich des, im unteren Kupplungsgegenmittel 45 angeordneten Schwenkelementes 26 ermöglicht.

Das in Fig. 10 gezeigte, erfindungsgemässe Schwenkelement 26 weist einen ersten Schenkel 27, einen zweiten Schenkel 28 und einen die beiden Schenkel verbindenden Verbindungsabschnitt 29 auf. Am ersten Schenkel 27 ist als Kupplungsmittel 30 der Bolzen 31 mit dem Hintergreifteil 32 ausgebildet. Am zweiten Schenkel 28 ist die als Schlitz 34 ausgebildete Aufnahme 33 für das Abspannmittel 5 vorgesehen. Im Verbindungsabschnitt 29 ist eine Einführöffnung 35 zum Einführen des Abspannmittels 5 mit bereits angeordneten Muttern 9.1 und 9.2 vorhanden. In Abhängigkeit der Abmessungen der Fixiervorrichtung 8 des Abspannmittels 5 ist die Einführöffnung 35 abschnittsweise mit einer Erweiterungsöffnung 36 versehen. Die Einführöffnung 35 und der Schlitz 34 stehen miteinander in Verbindung. Der zur Verfügung stehende Raum 38 zwischen dem ersten Schenkel 27 und dem zweiten Schenkel 28 ist derart ausgebildet, dass eine ausreichende Länge L für die Ausmittlung der Abspannmittel 5 vorhanden ist (Fig. 6).

Das als Gewindestange ausgebildete Abspannmittel 5 weist als Fixiervorrichtung 8 ein Aussengewinde 10 sowie Muttern 9.1 und 9.2 auf. An dem Anschlussbereich des Abspannmittels 5 werden jeweils die Muttern 9.1 und 9.2 in einem Abstand zueinander angeordnet. Das eine Schwenkelement 26 wird zur Festlegung des entsprechenden Abspannmittels 5 in dessen Richtung verschwenkt, bis die Fixiervorrichtung 8 des Abspannmittels 5 in der Aufnahme 33 des entsprechenden Schwenkelementes 26 eingeführt ist. Durch Drehen der Mutter 9.1 an dem Abspannmittel 5 sowie durch Justierung desselben in der Höhe kann das Abspannmittel 5 ausgemittelt werden. Mittels der als Kontermutter dienenden Mutter 9.2 wird das Abspannmittel 5 an dem Schwenkelement 26 lösbar und nachjustierbar festgelegt.

Nach dem Festlegen des Anbindeelementes 12 der Anbindevorrichtung 11 an der gewünschten Stelle am Betonträger 1 kann das Abspannmittel 5, wie zuvor beschrieben, an dem Schwenkelement 26 über die Fixiervorrichtung 8 festgelegt werden. Anschliessend wird eines der Schwenkelemente 26 in einen der Durchbrüche 16 im Anschlussteil 14 des Anbindeelementes 12 eingeführt, wobei die Nut 17 in dem Durchbruch 16 eine Führung für das Hintergreifteil 32 am Bolzen 31 des Schwenkelements 26 bildet. Sobald das Hintergreifteil 32 in einer Position zum Hintergreifen des in Einführrichtung gegenüberliegenden stirnseitigen Randes des Durchbruchs 16 ist, wird das Schwenkelement 26 durch Drehen um die Achse des Bolzens 31 am Anbindeelement 12 verschwenkt und ist gegen ein unbeabsichtigtes Lösen der Verbindung gesichert. Dieser Vorgang wird beim zweiten Schwenkelement 26 wiederholt, wobei dieses in den anderen Durchbruch 16 von der anderen Seite im Anschlussteil 14 des Anbindeelementes 12 eingeführt wird.

In den Fig. 5 und Fig. 6 ist eine weitere Variante einer erfindungsgemässen Anbindevorrichtung 51 gezeigt. Die Anbindevorrichtung 51 weist ein Anlageteil 53 und ein senkrecht zu diesem ausgerichtetes Anschlussteil 54 auf. An dem Anschlussteil 54 des Anbindeelementes 52 sind zwei Kupplungsmittel 50 vorgesehen, die jeweils einen Bolzen 56 mit einem, an dem freien Enden des Bolzens 56 angeordneten Hintergreifteil 57. Die beiden Kupplungsmittel 50 sind gegenüberliegend an den Seitenwänden 58.1, bzw. 58.2 angeordnet.

In Fig. 11 ist ein Ausführungsbeispiel eines mit einem Kupplungsgegenmittel 60 versehenen Schwenkelementes 61 für die Anordnung an einem Anbindeelement 52 mit zumindest einem Kupplungsmittel 50 gezeigt. Das Schwenkelement 61 weist einen kreiszylindrischen Durchbruch 66 mit einer quer zu der, von dem Querschnitt des Durchbruchs 66 aufgespannten Ebene verlaufende Nut 67 und an der Aussenseite des Schwenkelementes 61 eine Vertiefung 68 mit einem Anschlag 65 zur Begrenzung des Schwenkbereichs bei einer Anordnung an dem Anbindeelement 52 auf.

In der Fig. 7 ist eine Aufhängung 72 an einem Stahlträger 71 mit zwei erfindungsgemässen Anbindevorrichtungen 81 zur Festlegung von zwei schrägverlaufenden Abspannmitteln 5 für eine Abhängekonstruktion oder dergleichen gezeigt. Jede Anbindevorrichtung 81 umfasst ein Anbindeelement 82 und ein an dem Anbindeelement 82 schwenkbar angeordnetes Schwenkelement 26. Die beiden Anbindevorrichtungen 81 sind mittels einer quer über den Stahlträger verlaufenden Verspannvorrichtung 75 mit diesem verspannt, wobei die Verspannvorrichtung 75 eine Gewindestange 73 und an der Gewindestange 73 angeordnete Spannmuttern 74 umfasst. Bei der Anordnung von nur einer Anbindevorrichtung 81 an dem Stahlträger 71 kann für die Fixierung derselben am Stahlträger 71 auf die Gewindestange 73 verzichtetet oder nur ein Abschnitt einer Gewindestange zur Überbrückung des vorhandenen Freiraums des Anbindeelementes 82 vorgesehen werden.

Das erfindungsgemässe, zwingenartig ausgebildete Anbindeelement 82, insbesondere gemäss Fig. 8, weist als Anlageteil 83 einen ersten Zwingenabschnitt 91, einen zweiten Zwingenabschnitt 92 sowie einen den ersten Zwingenabschnitt 91 und den zweiten Zwingenabschnitt 92 verbindenden Verbindungsabschnitt 93 auf. An dem Verbindungsabschnitt 93 ist, senkrecht dazu ausgerichtet und fest mit diesem verbunden, ein Anschlussteil 84 auf, wobei ein Kupplungsgegenmittel 85 an diesem vorgesehen ist. Das Kupplungsgegenmittel 85 ist im Wesentlichen analog wie das Kupplungsgegenmittel 15 des Anbindeelementes 12 ausgebildet. An dem zweiten Zwingenabschnitt 92 ist eine Durchführöffnung 86 mit einem Innengewinde ausgebildet, in die eine als Befestigungsmittel 87 ausgebildete Schraube zur Festlegung des Anbindeelementes 82 an dem Stahlträger 71 eingreift. Der Verbindungsabschnitt 93 weist weiter eine Durchführöffnung 88 für das Verspannmittel 75 auf.

Für die Anordnung und Ausrichtung eines Anbindeelementes 96 (siehe Fig. 9) an einem geneigt verlaufenden Stahlträger 95, beispielsweise an einem Dachträger einer Halle mit einem Pultdach, weist dieses am ersten Zwingenabschnitt 97 und am zweiten Zwingenabschnitt 98 im Querschnitt konisch verlaufende Anlageflächen 99 bzw. 100 auf. An dem zweiten Zwingenabschnitt 98 sind zwei gegeneinander abgewinkelt ausgerichtete Durchführöffnungen 101 mit jeweils einem Innengewinde vorgesehen, in welche je eine als Befestigungsmittel 87 ausgebildete Schraube zur Festlegung des Anbindeelementes 96 an dem Stahlträger 95 eingreift. Für die Anordnung eines Verspannmittels, z. B. der Gewindestange 73, weist der erste Zwingenabschnitt 97 eine Ausnehmung 102 auf.

## Patentansprüche

1. Anbindevorrichtung für Abspannmittel (5) an einem Träger (1; 71; 95) einer Tragkonstruktion mit zumindest einem Anbindeelement (12; 42; 52; 82; 96) und zumindest einem schwenkbar mit dem zumindest einen Anbindeelement (12; 42; 52; 82; 96) verbindbaren Schwenkelement (26; 61), wobei die Anbindevorrichtung (11) zumindest ein Kupplungsgegenmittel (15; 45; 60; 85) und zumindest ein in das Kupplungsgegenmittel (15; 45; 60; 85) einführbares Kupplungsmittel (30; 50) aufweist zur Schaffung der schwenkbaren Verbindung zwischen dem zumindest einen Anbindeelement (12; 42; 52; 82; 96) und dem zumindest einen Schwenkelement (26; 61), und wobei das zumindest eine Anbindeelement (12; 42; 52; 82; 96) ein Anlageteil (13; 43; 53; 83) und zumindest einen, mit dem Anlageteil (13; 43; 53; 83) verbundenen Anschlussteil (14; 44; 54; 84) aufweist, wobei das zumindest eine Anschlussteil (14; 44; 54; 84) des Anbindeelementes (12; 42; 52; 82; 96) im Wesentlichen senkrecht zu einer, von einem Abschnitt des Anlageteils (13; 43; 53; 83) des Anbindeelementes (12; 42; 52; 82; 96) gebildeten Ebene ausgerichtet und fest mit diesem verbunden ist, und das Anlageteil (13; 43; 53; 83) zumindest eine Durchführöffnung (20; 86; 101) für ein Befestigungsmittel (6; 75; 87) zur Fixierung des zumindest einen Anbindeelementes (12; 42; 52; 82; 96) an dem Träger (1; 71; 95) aufweist, und wobei das zumindest eine Schwenkelement (26; 61) eine Aufnahme (33) für ein Abspannmittel (5) aufweist, **dadurch gekennzeichnet, dass** das zumindest eine Kupplungsgegenmittel (15; 45; 60; 85) einen, vorzugsweise kreiszylindrischen, Durchbruch (16; 66) mit zwei stirnseitigen Rändern umfasst, wobei der Durchbruch (16; 66) eine quer zu der, von dem Querschnitt des Durchbruchs (16; 66) aufgespannten Ebene verlaufende Nut (17; 67) aufweist, und das zumindest eine Kupplungsmittel (30; 50) einen, in den Durchbruch einführbaren, vorzugsweise kreiszylindrischen, Bolzen (31; 56) mit einem Hintergreifteil (32; 57) zum Hintergreifen eines der stirnseitigen Ränder des Durchbruchs (16; 66) umfasst, wobei das an einem freien Rand des Bolzens (31; 56) ausgebildete Hintergreifteil (32; 57), vorzugsweise im Wesentlichen komplementär zu der Nut (17; 67) ausgebildet ist.

2. Anbindevorrichtung nach Anspruch 1, **dadurch gekennzeichnet, dass** zumindest einer der stirnseitigen Randbereiche des Durchbruchs (16; 66) eine, optional umlaufende, Vertiefung (18; 68) aufweist, deren in der, von dem Querschnitt des Durchbruchs (16; 66) aufgespannten Ebene liegenden Erstreckungen grösser als die entsprechende Erstreckungen des Durchbruchs (16; 66) ist.

3. Anbindevorrichtung nach Anspruch 1 oder 2, **dadurch gekennzeichnet, dass** zumindest in einem Bereich des Kupplungsgegenmittels (60) zumindest ein Anschlag (65) zur Begrenzung des Schwenkbereichs des zumindest einen, mit dem zumindest einen Anbindeelement (52) verbindbaren Schwenkelementes (61) vorgesehen ist.

4. Anbindevorrichtung nach einem der Ansprüche 1 bis 3, **dadurch gekennzeichnet, dass** zwei Kupplungsgegenmittel (15; 45) für eine Anordnung von zwei Kupplungsmitteln (30; 50) vorgesehen sind.

5. Anbindevorrichtung nach einem der Ansprüche 1 bis 4, **dadurch gekennzeichnet, dass** das zumindest eine Kupplungsgegenmittel (15; 45; 85) an dem zumindest einen Anschlussteil (14; 44) des zumindest einen Anbindeelementes (12; 42) und das Kupplungsmittel (30) an dem zumindest einen Schwenkelement (26) vorgesehen ist.

6. Anbindevorrichtung nach einem der Ansprüche 1 bis 4, **dadurch gekennzeichnet, dass** das zumindest eine Kupplungsmittel (50) an dem zumindest einen Anschlussteil (54) des zumindest einen Anbindeelementes (52) und das Kupplungsgegenmittel (60) an dem zumindest einen Schwenkelement (61) vorgesehen ist.

7. Anbindevorrichtung nach einem der Ansprüche 1 bis 6, **dadurch gekennzeichnet, dass** das Anlageteil (83) des Anbindeelementes (82; 96) einen ersten Zwingenabschnitt (91; 97), einen dem ersten Zwingenabschnitt (91; 97) gegenüberliegend angeordneten zweiten Zwingenabschnitt (92; 98) sowie einen die beiden Zwingenabschnitte (91, 92; 97, 98) verbindenden Verbindungsabschnitt (93) zum Umgreifen eines Trägerrandes aufweist, wobei die zumindest eine Durchführöffnung (86; 101) für das Befestigungsmittel (87) an einem der Zwingenabschnitte (91, 92; 97, 98) vorgesehen und optional der zumindest eine Anschlussteil (84) an dem Verbindungsabschnitt (93) angeordnet ist.

8. Anbindevorrichtung nach einem der Ansprüche 1 bis 7, **dadurch gekennzeichnet, dass** das zumindest eine Schwenkelement (26; 61) einen ersten Schenkel (27), einen zweiten Schenkel (28) und einen die beiden Schenkel (27, 28) verbindenden Verbindungsabschnitt (29) aufweist, wobei das Kupplungsmittel (30) oder das Kupplungsgegenmittel (60) am ersten Schenkel (27) des Schwenkelementes (26; 61) und die Aufnahme (33) für das Abspannmittel (5) an dem zweiten Schenkel (28) des zumindest einen Schwenkelementes (26; 61) ausgebildet sind.

9. Anbindevorrichtung nach Anspruch 8, **dadurch gekennzeichnet, dass** die Aufnahme (33) für das Abspannmittel (5) an dem zweiten Schenkel (28) des zumindest einen Schwenkelementes (26; 61) als von einer Seite des zweiten Schenkels (28) verlaufender, offener Schlitz (34) ausgebildet ist.

10. Anbindevorrichtung nach einem der Ansprüche 8 oder 9, **dadurch gekennzeichnet, dass** der Verbindungsabschnitt (29) des zumindest einen Schwenkelementes (26; 61) eine Einführöffnung (35) zum Einführen des Abspannmittels (5) aufweist, wobei vorzugsweise die Einführöffnung (35) mit dem Schlitz (34) im zweiten Schenkel (28) des zumindest einen Schwenkelementes (26; 61) in Verbindung steht.

11. Anbindeelement, insbesondere für eine Anbindevorrichtung (11; 41; 81) nach einem der Ansprüche 1 bis 11, mit einem Anlageteil (13; 43; 83) und mit zumindest einem, mit dem Anlageteil (13; 43; 83) verbundenen Anschlussteil (14; 44; 84), wobei das Anlageteil (13; 43; 83) zumindest eine Durchführöffnung (20; 86, 88) für ein Befestigungsmittel (6; 75, 87) zur Fixierung des Anbindeelementes (12; 42; 82) an einem Träger (1; 71; 95) aufweist, und wobei zumindest ein Kupplungsgegenmittel (15; 45; 85) für eine Anordnung zumindest eines mit einem Kupplungsmittel (30) versehenen Schwenkelementes (26) an dem zumindest einen Anschlussteil (14; 44; 84) des Anbindeelementes (12; 42; 82) vorgesehen ist, wobei das zumindest eine Anschlussteil (14; 44; 84) des Anbindeelementes (12; 42; 82) im Wesentlichen senkrecht zu einer, von einem Abschnitt des Anlageteils (13; 43; 83) des Anbindeelementes (12; 42; 82) gebildeten Ebene ausgerichtet und fest mit diesem verbunden ist, **dadurch gekennzeichnet, dass** das zumindest eine Kupplungsgegenmittel (15; 45; 85) einen, vorzugsweise kreiszylindrischen, Durchbruch (16) mit zwei stirnseitigen Rändern ist, wobei der Durchbruch (16) eine quer zu der, von dem Querschnitt des Durchbruchs (16) aufgespannten Ebene verlaufende Nut (17) aufweist.

12. Anbindeelement nach Anspruch 11, **dadurch gekennzeichnet, dass** zumindest einer der stirnseitigen Randbereiche des Durchbruchs (16) eine, optional umlaufende Vertiefung (18) aufweist, deren in der, von dem Querschnitt des Durchbruchs (16) aufgespannten Ebene liegenden Erstreckungen grösser als die entsprechenden Erstreckungen des Durchbruchs (16) sind.

13. Anbindeelement nach Anspruch 11 oder 12, **dadurch gekennzeichnet, dass** zumindest in einem Bereich des Kupplungsgegenmittels (15; 45; 85) zumindest ein Anschlag zur Begrenzung des Schwenkbereichs des zumindest einen, mit dem Anbindeelement (12; 42; 82) verbindbaren Schwenkelementes (26) vorgesehen ist.

14. Anbindeelement, insbesondere für eine Anbindevorrichtung (51) nach einem der Ansprüche 1 bis 11, mit einem Anlageteil (53) und mit zumindest einem, mit dem Anlageteil (53) verbundenen Anschlussteil (54), wobei das Anlageteil (53) eine Durchführöffnung für ein Befestigungsmittel (6) zur Fixierung des Anbindeelementes an einem Träger (1) aufweist, und wobei zumindest ein Kupplungsmittel (50) für eine Anordnung zumindest eines mit einem Kupplungsgegenmittel (60) versehenen Schwenkelementes (61) an dem Anschlussteil (54) des Anbindeelementes (52) vorgesehen ist, wobei das zumindest eine Anschlussteil (54) des Anbindeelementes (52) im Wesentlichen senkrecht zu einer, von zumindest einem Abschnitt des Anlageteils (53) des Anbindeelementes (52) gebildeten Ebene ausgerichtet und fest mit diesem verbunden ist, **dadurch gekennzeichnet, dass** das zumindest eine Kupplungsmittel (50) einen, in einen Durchbruch (16; 66) einführbaren, vorzugsweise kreiszylindrischen, Bolzen (31; 56) mit einem Hintergreifteil (32; 57) zum Hintergreifen eines der stirnseitigen Ränder eines Durchbruchs (16; 66) umfasst, wobei das Hintergreifteil (57) an einem freien Rand des Bolzens (31; 56) ausgebildet ist.

15. Anbindeelement nach einem der Ansprüche 11 bis 14, **dadurch gekennzeichnet, dass** zwei Kupplungsgegenmittel (15; 45) oder zwei Kupplungsmittel (50) an dem zumindest einen Anschlussteil (14; 44; 54) des Anbindeelementes (12; 42; 52) vorgesehen sind.

16. Anbindeelement nach einem der Ansprüche 11 bis 15, **dadurch gekennzeichnet, dass** an dem Anlageteil (13) des Anbindeelementes (12) zwei Anschlussteile (14) vorgesehen sind.

17. Anbindeelement nach einem der Ansprüche 11 bis 16, **dadurch gekennzeichnet, dass** das Anlageteil (83) des Anbindeelementes (82; 96) einen ersten Zwingenabschnitt (91; 97), einen dem ersten Zwingenabschnitt (91; 97) gegenüberliegend angeordneten zweiten Zwingenabschnitt (92; 98) und einen die beiden Zwingenabschnitte (91, 92; 97, 98) verbindenden Verbindungsabschnitt (93) zum Umgreifen eines Trägerrandes aufweist, wobei die Durchführöffnung (86; 101) für das Befestigungsmittel (87; 101) an einem der Zwingenabschnitte (91, 92; 97, 98) vorgesehen und optional der zumindest eine Anschlussteil (84) an dem Verbindungsabschnitt (93) angeordnet ist.

18. Anbindeelement nach Anspruch 17, **dadurch gekennzeichnet, dass** an dem ersten Zwingenabschnitt (97) und/oder an dem zweiten Zwingenabschnitt (98) zumindest zwei im Querschnitt im Wesentlichen konisch, unter Bildung einer Verengung zwischen dem ersten Zwingenabschnitt (97) und dem zweiten Zwingenabschnitt (98) auf einen Kulminationspunkt zulaufende Anlageflächen (99, 100) vorgesehen sind.
